# EUROPEAN PATENT APPLICATION

(11) **EP 4 279 325 A1**
(43) Date of publication of application: **22.11.2023**
(21) Application number: 22174191.1
(22) Date of filing: 18.05.2022
(51) Int. Cl.: B60L 53/16, B60L 53/30

(54) **ELECTRICAL CIRCUITRY FOR AN ELECTRIC VEHICLE CHARGING STATION**

(71) Applicant: Phoenix Contact e-Mobility GmbH, 32816 Schieder-Schwalenberg (DE); eNovates, 9160 Lokeren (BE)
(72) Inventor: Vispoel, Stijn, 9040 Sint-Amandsberg (BE); Stüker, Daniela, 32816 Schieder-Schwalenberg (DE); Giesbrecht, Stephan, 32816 Schieder-Schwalenberg (DE); Karzellek, Michael, 32816 Schieder-Schwalenberg (DE)
(74) Representative: IP HILLS NV

(57) **Abstract**

An electrical circuitry for an electric vehicle charging station, comprising a printed circuit board that comprises at least two conductive tracks for conducting electrical charging currents. The electrical circuitry further comprises at least two conductive connector tabs provided onto the printed circuit board and conductively coupled to the at least two conductive tracks; and a charging socket for receiving a charging cable, provided onto the printed circuit board. The charging socket comprises at least two contact pins, for providing a conductive coupling between the at least two conductive connector tabs and the charging cable. In an inventive way, the at least two contact pins are electrically connected with the at least two conductive connector tabs by means of a friction fit.

## Description

### Field of the Invention

The present invention generally relates, amongst others, to an electrical circuitry for an electric vehicle charging station.

### Background of the Invention

An electric vehicle charging station charges or discharges an electric vehicle. Such a charging station typically includes electric circuitry to control the operation of the charging station, e.g. monitor and control the charging process, read or scan RFID cards, arrange payments, and display messages. To this end, the conductors carrying the charging current are wired to a plurality of electronic components within the charging station. These electronic components are typically grouped onto one or more printed circuit boards.

Charging stations can further include a charging socket for establishing an electrical connection between the charging station and the electric vehicle. The charging socket receives the plug of a charging cable at a frontside. At the backside of the charging socket there are contact pins to wire the socket to the internal power conductors in the charging station. This internal wiring may be done when installing the charging station, typically by a certified professional. The contact pins can be directly wired to the power conductors inside the charging station or via one or more electronic components, e.g. a contactor on the printed circuit board. A problem with such wiring is that it is time-consuming and labour-intensive to perform. Additionally, the various connections between the contact pins and power conductors reduce charging efficiency due to an increased electrical resistance.

In order to avoid such wiring the contact pins of the charging socket are sometimes directly bolted or soldered onto the power conductors, e.g. directly onto the power conductors of a printed circuit board. However, a bolted connection can be a thermal hotspot under substantially high loads, e.g. during fast-charging, resulting in reduced charging efficiency due to local thermal expansion and increased electrical resistance. Soldering can result in a decreased ability to withstand mechanical abuse from repeated plugging and unplugging of the charger plug into the charging socket.

### Summary of the Invention

It is an object of the present invention, amongst others, to at least partially solve the above identified challenges and problems by providing an electrical circuitry for an electric vehicle charging station having reduced wiring.

According to a first aspect, this object is achieved by an electrical circuitry for an electric vehicle charging station, comprising a printed circuit board that comprises at least two conductive tracks for conducting electrical charging currents. The electrical circuitry further comprises at least two conductive connector tabs provided onto the printed circuit board and conductively coupled to the at least two conductive tracks; and a charging socket for receiving a charging cable, provided onto the printed circuit board. The charging socket comprises at least two contact pins, for providing a conductive coupling between the at least two conductive connector tabs and the charging cable. In an inventive way, the at least two contact pins are electrically connected with the at least two conductive connector tabs by means of a friction fit.

By the friction fit, the at least two contact pins and the at least two conductive connector tabs are held in direct physical contact, thereby providing an electrical connection between them. The friction fit thus provides a conductive path for an electrical charging current from the at least two conductive tracks, along the at least two conductive connector tabs, to the at least two contact pins of the charging socket. As such, the conductive path for the electrical charging current is provided without substantial wiring, which reduces conductor losses and allows a more time and labour efficient installation process of a charging station. This has the advantage that the cost to install an electric vehicle charging station comprising the electrical circuitry can be reduced.

The friction fit may further be sufficiently tight to secure the charging socket onto the printed circuit board. The tightness of the friction fit can preferably be determined such that the friction fit allows limited play or movement of the at least two contact pins relative to the at least two conductive connector tabs when fitted without losing substantial physical contact between them. As such, the friction fit can allow substantial thermal expansion, thermal contraction, and mechanically induced movement of the at least two contact pins without losing electrical connection with the at least two conductive connector tabs, or vice-versa.

This has the further advantage that the electrical circuitry can have improved tolerance for thermal variations, mechanical abuse of the charging socket, and frequent use of the charging socket. It is a further advantage that the friction fit can reduce conductor losses under high loads, e.g. during fast-charging.

According to an embodiment, the at least two contact pins can respectively comprise substantially wedge-shaped tips that fit into slots provided in the at least two conductive connector tabs by the friction fit.

The wedge-shaped tip may preferably comprise a substantial surface area, in particular an outer portion of the wedge-shaped tip that can be conductively coupled to a conductive connector tab. This can provide a substantial contact surface for the friction fit, thereby improving the electrical connection between the contact pin and the conductive connector tab. The outer portion of the wedge-shaped tip may be substantially narrow, measured along a direction transverse to the contact surface, thereby reducing the amount of material of the contact pin and limiting its contribution to the electrical resistance.

According to an embodiment, the conductive connector tab can further comprise at least two opposing lobes configured to receive and to apply pressure to a contact pin such that the at least two lobes provide the friction fit.

The at least two lobes may, but need not, protrude from a base portion of the conductive connector tab. The at least two lobes may be positioned at opposing sides of the base portion, in particular facing and extending toward each other. The at least two opposing lobes may be substantially flexible, such that they can flex in substantially opposite directions when receiving the contact pin while still applying sufficient pressure thereto to provide the friction fit when fitted. Preferably, the conductive connector tab can comprise more than one such couple of two opposing lobes. As such, the opposing lobes can apply a different pressure to the received contact pin, e.g. according to local temperature gradients or mechanical forces on the contact pin. This has the further advantage that the electrical contact between the contact pin and the conductive connector tab can be improved.

According to an embodiment, the at least two opposing lobes can be configured with a clearance that is smaller compared to a thickness of the at least two contact pins.

By the smaller clearance, the at least two opposing lobes and the at least two contact pins are held together by friction after a mating process. The clearance can be a distance between the at least two opposing lobes. The clearance may be substantially equal along the at least two opposing lobes. Alternatively, the clearance may vary along the at least two opposing lobes, e.g. according to a varying thickness of a contact pin.

According to an embodiment, the at least two conductive connector tabs can be soldered onto the at least two conductive tracks.

Hereto, one or more soldering elements can protrude from a base portion of the at least two conductive connector tabs. Alternatively, a base portion of the conductive connector tabs can be soldered directly onto the at least two conductive tracks. By the soldered connection, the conductor losses can be further reduced.

According to an embodiment, the at least two conductive connector tabs and the at least two contact pins can be made of a substantially conductive material.

The material of the at least two conductive connector tabs may, but need not be, substantially equal to the material of the contact pins. A substantially conductive material can for example be copper, annealed copper, silver, aluminium, gold, zinc, cobalt, nickel, iron, platinum, steel, lead, graphite, any combination thereof, or any other conductive material known to the person skilled in the art.

According to a second aspect, the invention relates to an electric vehicle charging station comprising an electrical circuitry according to any of the preceding claims, and a housing providing access to the charging socket.

The electric vehicle charging station may be connected to an electric power source, e.g. a local electrical grid, a utility grid, a solar panel installation, or an energy storage system. By this connection, the electric power source can supply an electrical charging current to the electric vehicle charging station, in particular to the at least two conductive tracks of the electrical circuitry. This electrical charging current can further be conducted along the at least two conductive connector tabs, which are conductively coupled to the at least two conductive tracks. By the friction fit, the electrical charging current can further be conducted to the at least two contact pins of the charging socket. A charging cable of an electric vehicle can be plugged into this charging socket, allowing to charge or discharge the electric vehicle with the electrical charging current. Access to the charging socket may further be provided by including the charging socket in the housing of the electric vehicle charging station, i.e. a casing that encloses and protects the internal equipment of the electric vehicle charging station such as the electric circuitry.

According to an embodiment, the charging socket of the electrical circuitry can further comprise attachment means configured to attach the charging socket to the housing of the electric vehicle charging station.

The attachment means can thus secure the charging socket in a desired position on the housing of the electric vehicle charging station. The attachment means may for example be, amongst others, retainers, screws, bolts, rivets, grommets, plugs, pins, snap fits, or any other attachment means known to the person skilled in the art.

### Brief Description of the Drawings

Fig. 1 shows a schematic representation of an electric vehicle charging station according to an example embodiment that is connected to a power source and an electric vehicle;
Fig. 2 shows a schematic cross-sectional view on an electric vehicle charging station according to an example embodiment;
Fig. 3 shows a perspective view on an example embodiment of an electrical circuitry for an electric vehicle charging station;
Fig. 4A shows a perspective view on an example embodiment of a charging socket for the electrical circuitry;
Fig. 4B shows a schematic cross-sectional view on example embodiments of a contact pin for the electrical circuitry;
Fig. 5A shows a side view on an example embodiment of a conductive connector tab for the electrical circuitry;
Fig. 5B shows a perspective view on an example embodiment of a conductive connector tab for the electrical circuitry; and
Fig. 5C shows a top view on an example embodiment of a conductive connector tab for the electrical circuitry.

### Detailed Description of Embodiment(s)

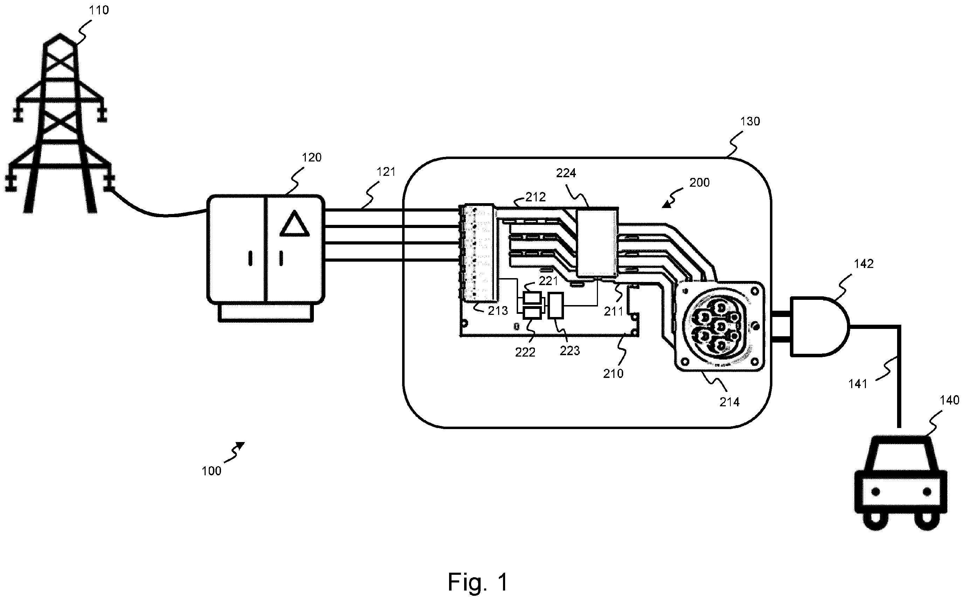

Fig. 1 shows a schematic representation 100 of an electric vehicle charging station 130 according to an example embodiment that is connected to a power source 110 and an electric vehicle 140. The electric vehicle charging station 130, further referred to as a charging station, is a device that charges an electric vehicle 140 with energy from the power source 110. Alternatively or complementary, the charging station can discharge energy stored in the electric vehicle 140 to the power source 110. An electric vehicle 140 is any vehicle having an energy storage system, e.g. a battery. An electric vehicle may for example be a battery powered electric car, a hybrid electric car, an electric bus, an electric truck, or an electric motorcycle. The electric vehicle 140 may be charged through an electrical connection between the vehicle 140 and the charging station 130. Such connection may for example be established by a charging cable 141, thereby providing conductive charging.

The electrical charging current may be supplied to the charging station 130 by an electric power source 110, e.g. a local electrical grid, a utility grid, a solar panel installation, or an energy storage system. The electrical charging current may be alternating current, AC, or direct current, DC. The electric charging current may, but need not be converted at least once between AC and DC along the path from the power source 110 to the electric vehicle 140. The electrical charging current may also flow in an inverse direction, i.e. from the electric vehicle 140 to the power source 110, thereby discharging the electric vehicle. A vehicle-to-grid system or a vehicle-to-home system are examples wherein the electrical charging current can flow in both directions.

The electric power source 110 may be connected to a distribution switchboard 120, i.e. a system that can divide the supplied current into subsidiary circuits while providing protective means for those circuits. The distribution switchboard may include cables 121 connected to the charging station 130. The distribution switchboard 120 may for example include a residual current device to protect the subsidiary circuit 121 that feeds the charging station 130. Alternatively, a residual current device may be included in the charging station 130.

The charging station 130 includes an electric circuitry 200, e.g. for controlling the operation of the charging station 130. The electric circuitry 200 comprises a printed circuit board 210 including at least two conductive tracks 211, 212 for conducting the electrical charging current along the printed circuit board 210. The printed circuit board may include more than two conductive tracks 211, 212, in particular three or four, depending on the type of electrical current, i.e. AC or DC, and the type of electrical system, e.g. monophase, three-phase, or three-phase with a neutral wire. The electric circuitry 200 may for example comprise a connector 213 to connect the at least two conductive tracks 211, 212 of the electric circuitry 200 to the cables 121 of the distribution switchboard 120.

The electric circuitry 200 further comprises a charging socket 214 for receiving the plug 142 of a charging cable 141, provided onto the printed circuit board 210. The charging socket 214 is configured to electrically connect the conductive tracks 211, 212 to the plug 142 of the charging cable 141 without substantial wiring. Therefore, the charging socket 214 includes at least two contact pins (not shown in Fig. 1) that are friction fitted to at least two conductive connector tabs (not shown in Fig. 1) conductively coupled to the conductive tracks 211, 212. The charging socket 214 may be, amongst others, any charging socket according to IEC 62196 standards, e.g. a Type 1 socket, a Type 2 socket, a Type 3 socket, a combined charging system, CSS, combo 1 socket, a CSS combo 2 socket, or a Chademo socket.

It is to be understood that the printed circuit board 210 may not be limited to including the electrical components of electric circuitry 200. The printed circuit board 210 may for example comprise additional components 221, 222, 223, 224 configured to, amongst others, monitor and/or control the charging process, read or scan RFID cards, arrange payments, display messages, connect the printed circuit board to other components, test the correct and safe operation of the charging station, or any other function related to the operation of the charging station. Such electronic components 221, 222, 223, 224 may for example include, amongst others, resistors, connectors, switches, circuit breakers, transistors, capacitors, control units, comparators, multivibrators, operational amplifiers, switches, voltage sources, or current sources. Alternatively, the charging station 130 may include one or more additional printed circuit boards comprising electrical components for the operation of the charging station 130.

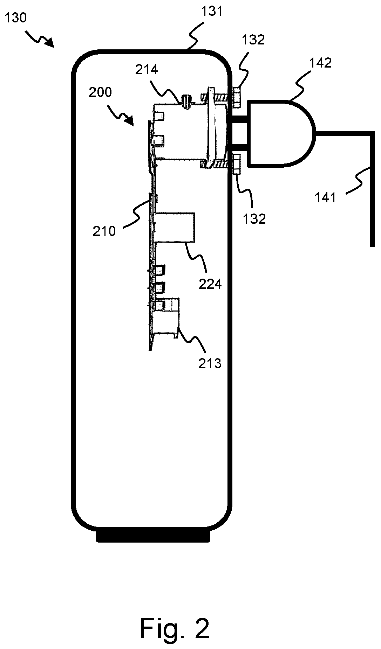

Fig. 2 shows a schematic cross-sectional view on an electric vehicle charging station 130 according to an example embodiment. The charging station 130 may include a housing 131 that encloses and protects the internal equipment of the electric vehicle charging station 130, e.g. the electric circuitry 200. The housing may further provide access for a charging cable 141 of an electric vehicle 140 by the charging socket 214, which may be attached to the housing 131. This may for example be achieved by one or more attachments means 132 included in the charging socket 214. The attachment means 132 may for example be, amongst others, retainers, screws, bolts, rivets, grommets, plugs, pins, snap fits, or any other attachment means known to the person skilled in the art. The housing and the charging socket 214 may further comprise corresponding means configured to receive the attachment means 132.

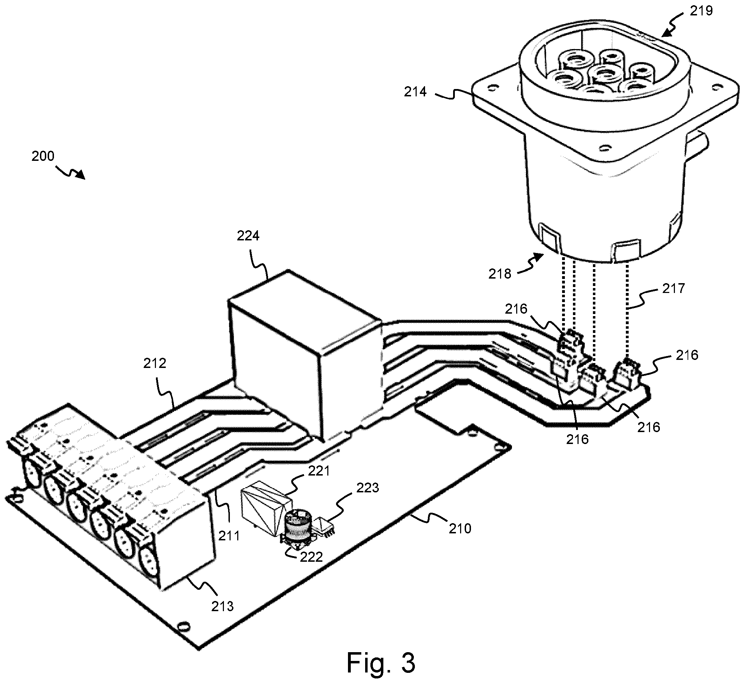

Fig. 3 shows a perspective view on an example embodiment of the electrical circuitry 200 for an electric vehicle charging station. The printed circuit board 210 may also comprise additional components such as for example components 221, 222, 223, 224 as previously described. The at least two conductive tracks 211, 212 are included in the printed circuit board 210 of the electric circuitry 200. The conductive tracks 211, 212 may for example be strips of conducting material such as copper deposited on the insulating surface of a printed circuit board 210. Alternatively, the conductive tracks 211, 212 may be located within the printed circuit board 210, e.g. between two insulating layers of a multilayer printed circuit board. An electric charge, i.e. the electrical charging current, can thus be conducted along these at least two conductive tracks 211, 212, i.e. along the printed circuit board 210. The printed circuit board may include more than two conductive tracks 211, 212, in particular three or four, depending on the type of electrical current, i.e. AC or DC, and the type of electrical system, e.g. monophase, three-phase, or three-phase with a neutral wire.

The electrical circuitry 200 further comprises conductive connector tabs 216, in particular three or four, depending on the amount of conductive tracks 211, 212. These tabs 216 can preferably be made of a substantially conductive material such as for example, amongst others, copper, annealed copper, silver, aluminium, gold, zinc, cobalt, nickel, iron, platinum, steel, lead, graphite, any combination thereof, or any other conductive material known to the person skilled in the art.

The tabs 216 are provided onto the printed circuit board 210 and are conductively coupled to the conductive tracks 211, 212. In particular, each conductive connector tab 216 can be conductively coupled to a respective conductive track 211, 212. Alternatively, more than one conductive connector tab 216 may be coupled to the same conductive track 211, 212. In the context of the present application, conductive coupling refers to the process of electrical energy transfer between at least two conductive objects that is facilitated by their physical contact.

Preferably, the tabs 216 can be soldered directly onto the conductive tracks 211, 212, e.g. by soft soldering, silver soldering, brazing, or any other soldering method known to the skilled person. Hereto, the tabs 216 may include one or more soldering elements that protrude from a base portion of the tabs 216. Alternatively, the base portion of the tabs 216 can be soldered directly onto the conductive tracks 211, 212. Alternatively or complementary, conductively coupling the tabs 216 to the tracks 211, 212 may further be achieved by clips, screws, clamps, sockets, or electrically conductive adhesive.

The electric circuitry 200 further comprises a charging socket 214 that includes at least two contact pins (not shown in Fig. 3), in particular at a first end 218 of the charging socket 214. The at least two contact pins are made of a substantially conductive material. The material of the contact pins may, but need not be, substantially equal to the material of the conductive connector tabs 216. The tabs 216 may further be configured to receive and apply pressure to the at least two contact pins, in particular three or four, depending on the amount of tabs 216. In other words, the pins of the charging socket 214 are friction fitted 217 to the tabs 216 of the printed circuit board 210, holding them in direct physical contact and thereby providing an electrical connection between them. Preferably, each contact pin can be fitted to a respective tab 216.

The friction fit 217 may for example be provided by fitting an oversized contact pin into a respective undersized aperture included in a connector tab 216, e.g. an opening, a hole, or a slit. The overall shape of the contact pins may be determined according to the overall shape of the respective apertures in the tabs 216, or vice-versa. The dimensions of the contact pins and the apertures in the tabs 216 may further be determined such that they are held together by friction after a mating process. The contact pins and the tabs 216 may for example be mated by force, thermal expansion, thermal contraction, or a combination thereof. The mating process may be performed prior to the on-site installation of the electric vehicle charging station, e.g. during the manufacturing or assembling of the electrical circuitry 200. This allows a more time and labour efficient installation process of the charging station, as it is no longer necessary to wire the charging socket 214 to the printed circuit board 210 on-site, i.e. at the particular place or location where the charging station is installed.

The friction fit 217 thus provides a conductive path for an electrical charging current from the conductive tracks 211, 212, along the conductive connector tabs 216, to the contact pins of the charging socket 214. As such, this conductive path for the electrical charging current is provided without substantial wiring, which reduces conductor losses and allows a more time and labour efficient installation process of a charging station. This has the advantage that the cost to install an electric vehicle charging station comprising the electrical circuitry 200 can be reduced.

It will be apparent to those skilled in the art that the friction fit may also be provided by fitting an undersized aperture of a connector tab 216 over an oversized contact pin, and that the function of the connector tabs and contact pins are interchangeable, i.e. that the connector tabs may be included in the charging socket 214 while the contact pins may be provided on the printed circuit board 210. It should further be understood that Fig. 3 illustrates a partly exploded view of the electrical circuitry 200, wherein the charging socket 214 is detached from the printed circuit board 210 as to clearly show the conductive connector tabs 216.

The contact pins of the charging socket 214 can further be conductively coupled to a plug of a charging cable when connected to the charging station. In particular, a plug may be connected at a second end 219 of the charging socket 214 substantially opposite to the first end 218. A connected electric vehicle can thereby be charged or discharged by the electrical charging current that is conducted along the aforementioned conductive path of the electric circuitry 200 and the connected charging cable.

The friction fit 217 may, but need not, be sufficiently tight to secure the charging socket 214 onto the printed circuit board 210. In other words, the friction fit 217 may be sufficient to hold the charging socket 214 in its desired position on the printed circuit board 210. Alternatively or complementary, the charging socket 214 may comprise attachment elements to secure the charging socket 214 to the printed circuit board 210.

The tightness of the friction fit 217 can preferably be determined such that the friction fit allows limited play or movement of the contact pins relative to the connector tabs 216 when fitted, without losing substantial physical contact. The tightness of the friction fit may for example be determined by the dimensions of the contact pins relative to the dimensions of the respective apertures in the tabs 216. By the limited play or movement, the friction fit allows substantial thermal expansion, thermal contraction, and mechanically induced movement of the contact pins without losing electrical connection with the connector tabs 216 and thus the conductive tracks 211, 212. Additionally, the electrical connection between the contact pins and the conductive connectors tabs 216 can be maintained without substantially increasing the electrical resistance under demanding operating conditions such as, for example, thermal expansion due to fast-charging, thermal expansion or contraction due to changes in ambient temperature, mechanical abuse of the charging socket 214, or frequent plugging and unplugging of the charging socket 214. This has the further advantage that the friction fit 217 can reduce conductor losses under demanding operating conditions.

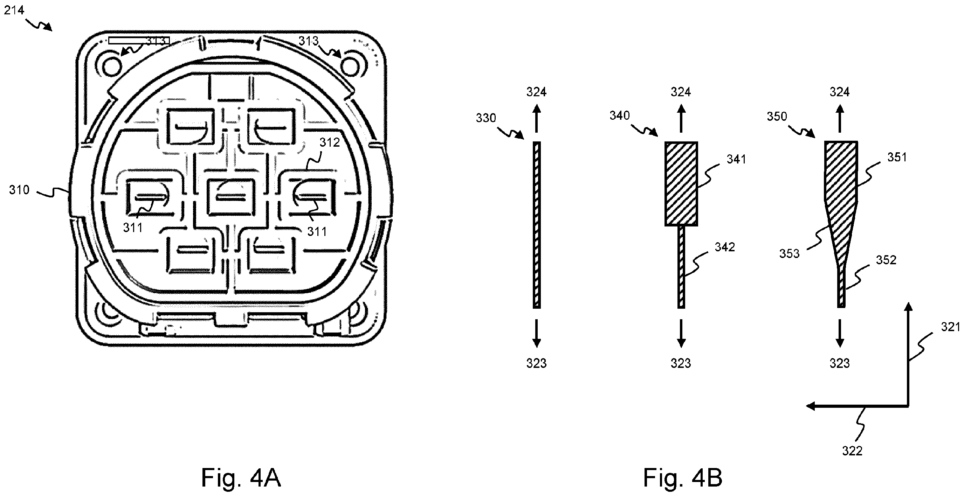

Fig. 4A shows a perspective view on an example embodiment of a charging socket 214 for the electrical circuitry. The charging socket 214 comprises a plurality of contact pins 311 that protrude from an outer casing 310 of the charging socket 214. The outer casing 310 may further comprise at least two recesses 312 that partially enclose the at least two contact pins 311. The recesses 312 may further partially enclose the conductive connector tabs when friction fitted to the contact pins 311. The contact pins 311 included in the charging socket 214 may, but need not, be characterized by substantially equal shapes and dimensions. In other words, the charging socket 214 may comprise a number of contact pins 311 of a certain shape, e.g. optimized for AC standard charging, in addition to a number of contact pins 311 of a different shape, e.g. optimized for DC fast charging.

The charging socket 214 may further comprise attachment means configured to attach the socket 214 to the housing of an electric vehicle charging station. The attachment means may for example be, amongst others, retainers, screws, bolts, rivets, grommets, plugs, pins, snap fits, or any other attachment means known to the person skilled in the art. The charging socket 214 and the housing of the electric vehicle charging station may comprise corresponding means 313 configured to receive the attachment means.

Fig. 4B shows a schematic cross-sectional view on example embodiments 330, 340, 350 of a contact pin for the electrical circuitry. The contact pin 330, 340, 350 may be conductively coupled, i.e. friction fitted, to a conductive connector tab at a first end 323, and conductively coupled to a plug of a charging cable at a second end 324. The contact pin 330, 340, 350 may preferably comprise a substantial surface area such that it provides a substantial contact surface for the friction fit, i.e. for the electrical connection. As such, the electrical contact between the contact pin 330, 340, 350 and the conductive connector tab can be improved. The contact pin 330, 340, 350, may preferably be substantially narrow, measured along a direction 322 transverse to the contact surface, in particular near the first end 323 of a contact pin where it is friction fitted to a connector tab. This can reduce the amount of material of the contact pin 330, 340, 350, which limits its contribution to the electrical resistance, and thus further reduces the conductor losses.

The contact pin 330 may for example have a substantially rectangular shape extending along a longitudinal direction 321. Alternatively, a contact pin 340 may comprise an inner portion 341 conductively coupled to a plug of a charging cable, and an outer portion 342 conductively coupled to a conductive connector tab. The inner portion 341 may be substantially thicker relative to the outer portion 342. The portions 341, 342 may for example be substantially shaped as a cuboid or a cylinder. The thicker inner portion 341 can improve the ability of the contact pin to withstand the stress of physical forces, which can improve the tolerance of the electric circuitry to frequent use and mechanical abuse of the charging socket 214.

Preferably, a contact pin may comprise a substantially wedge-shaped tip 350, including a tapered portion 353 along which the thickness of the contact pin tapers from a relatively thick inner portion 351 to a relatively thin outer portion 352. The tapered portion 353 can further improve the ability of the contact pin to withstand the stress of physical forces, thereby improving its tolerance to frequent use and mechanical abuse of the charging socket 214.

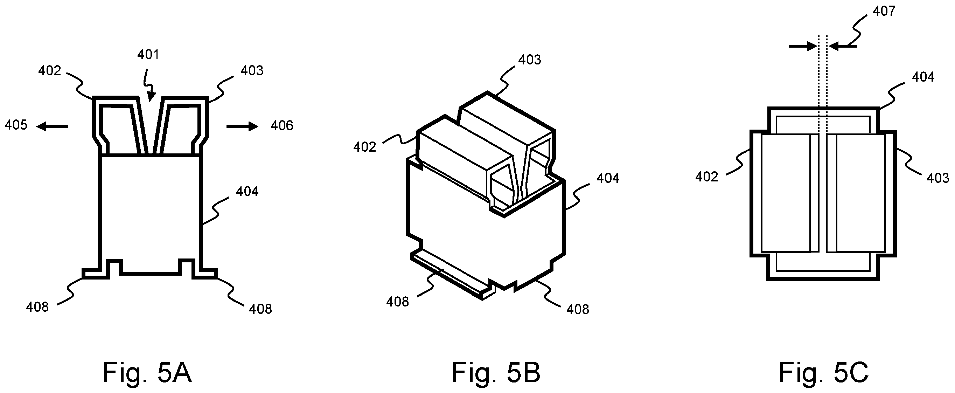

Fig. 5A, 5B, and 5C respectively show a side view, perspective view, and a top view on an example embodiment of a conductive connector tab 216 for the electrical circuitry. The conductive connector tab 216 of the electrical circuitry may provide a slot 401 wherein the contact pins can be friction fitted. Such a slot 401 can be a substantially longitudinal and narrow aperture provided in the conductive connector tab 216. In other words, the friction fit can thus preferably be provided by fitting the contact pins into the respective slots 401 of the connector tabs 216.

Preferably, this slot 401 can be provided by at least two opposing lobes 402, 403 that may, but need not, protrude from a base portion 404 of the tab 216. The at least two opposing lobes 402, 403 may be substantially flexible, such that they can flex in substantially opposite directions 405, 406 when receiving the contact pin while applying sufficient pressure thereto when fitted to provide the friction fit. The opposing lobes 402, 403 may be positioned at opposing sides of the base portion 404, in particular facing and extending toward each other. Preferably, the conductive connector tab 216 can comprise more than one such couple of opposing lobes 402, 403. For example, four couples of opposing lobes 402, 403 distributed along the base portion 404 of the conductive connector tab 216. In doing so, the opposing lobes 402, 403 can apply a different pressure to the received contact pin, e.g. according to local temperature gradients or mechanical forces on the contact pin. This has the further advantage that the electrical contact between the contact pin and the conductive connector tab 216 can be improved.

The clearance 407 between two opposing lobes 402, 403, i.e. a distance between the opposing lobes, may be determined to be smaller relative to the thickness of the fitted contact pin such that they are held together by friction after being mated. The clearance 407 may be smaller relative to a thickness of the contact pin anywhere along the contact pin, e.g. relative to a thickness of an outer portion, an inner portion, or anywhere along a tapered portion of a contact pin. The clearance 407 may further be substantially equal along the at least two opposing lobes 402, 403. Alternatively, the clearance 407 may vary along the at least two opposing lobes, e.g. according to a tapering thickness of a wedge-shaped tip. The conductive conductor tab 216 may further include one or more soldering elements 408 that protrude from the base portion 404 to conductively couple, i.e. to solder, the tab 216 to the conductive tracks.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An electrical circuitry (200) for an electric vehicle charging station, comprising:
- a printed circuit board (210) comprising at least two conductive tracks (211, 212) for conducting electrical charging currents;
- at least two conductive connector tabs (216) provided onto the printed circuit board and conductively coupled to the at least two conductive tracks (211, 212);
- a charging socket (214) for receiving a charging cable, provided onto the printed circuit board (210);
- the charging socket comprising at least two contact pins (311), for providing a conductive coupling between the at least two conductive connector tabs and the charging cable; and
wherein the at least two contact pins are electrically connected with the at least two conductive connector tabs by means of a friction fit (217).

2. The electrical circuitry according to claim 1, wherein the at least two contact pins (311) respectively comprise substantially wedge-shaped tips that fit into slots (401) provided in the at least two conductive connector tabs (216) by the friction fit.

3. The electrical circuitry according to any of the preceding claims, wherein a conductive connector tab (216) further comprises at least two opposing lobes (402, 403) configured to receive and to apply pressure to a contact pin such that the at least two lobes provide the friction fit.

4. The electrical circuitry according to claim 3, wherein the at least two opposing lobes (402, 403) are configured with a clearance (407) that is smaller compared to a thickness of the at least two contact pins.

5. The electrical circuitry according to any of the preceding claims, wherein the at least two conductive connector tabs (216) are soldered onto the at least two conductive tracks (211, 212).

6. The electrical circuitry according to any of the preceding claims, wherein the at least two conductive connector tabs (216) and the at least two contact pins (311) are made of a substantially conductive material.

7. An electric vehicle charging station (130) comprising an electrical circuitry (200) according to any of the preceding claims and a housing (131) providing access to the charging socket (214).

8. An electric vehicle charging station (130) according to claim 7, wherein the charging socket (214) of the electrical circuitry (200) further comprises attachment means (132) configured to attach the charging socket to the housing (131) of the electric vehicle charging station.
